# EUROPÄISCHE PATENTSCHRIFT

(11) **EP 2 704 915 B1**
(45) Veröffentlichungstag und Bekanntmachung des Hinweises auf die Patenterteilung: **18.02.2015**
(21) Anmeldenummer: 11796925.3
(22) Anmeldetag: 09.12.2011
(51) Int. Cl.: B60K 1/04, B60K 1/00, B62D 21/17, B62D 25/20, H01M 2/10, H01M 10/613

(54) **FAHRZEUG MIT EINER BATTERIE**
VEHICLE WITH A BATTERY
VÉHICULE AVEC UNE BATTERIE

(30) Priorität: 05.05.2011 DE 102011100623
(43) Veröffentlichungstag der Anmeldung: 12.03.2014
(73) Patentinhaber: Daimler AG, 70327 Stuttgart (DE)
(72) Erfinder: HELBER, Jan, 72336 Balingen (DE)
(74) Vertreter: JENSEN & SON
(86) Internationale Anmeldenummer: PCT/EP2011/006215
(87) Internationale Veröffentlichungsnummer: WO 2012/149948

(56) Entgegenhaltungen:
- EP-A1- 1 591 293
- JP-A- 9 118 140
- US-A1- 2011 027 632

## Beschreibung

Die Erfindung betrifft ein Fahrzeug mit einer Batterie und einer Fahrzeug-Tragstruktur, nach der im Anspruch 1 näher definierten Art.

Aus dem allgemeinen Stand der Technik sind Fahrzeuge bekannt, welche zumindest teilweise elektrisch angetrieben werden. Diese Fahrzeuge benötigen Batterien, welche auch als Traktionsbatterien bezeichnet werden, die elektrische Leistung für den Vortrieb des Fahrzeugs speichern. Diese Batterien müssen im Fahrzeug sicher, stabil und möglichst platzsparend untergebracht werden, um beispielsweise den Laderaum in dem Fahrzeug nicht oder nur unwesentlich zu schmälern.

Aus der DE 10 2007 063 193 A1 ist eine Batterie mit einer Überdrucksicherung bekannt. Typischerweise werden Batterien, wie sie als Traktionsbatterien in Fahrzeugen eingesetzt werden, in Speichertechnologien realisiert, welche eine hohe Speicherdichte ermöglichen, beispielsweise in Lithium-Ionen-Technologie. Grundsätzlich besteht bei derartigen Technologien die Gefahr, dass es bei einem Kurzschluss oder einer Überladung der Batterie zu einem Überdruck in der Gesamtbatterie oder in einzelnen der Batterieeinzelzellen, aus denen die Gesamtbatterie typischerweise aufgebaut ist, kommt. Um einen solchen Überdruck im Notfall abbauen zu können, bevor die Batterie und die Umgebung der Batterie Schaden nimmt, ist es typischerweise vorgesehen, dass im Schadensfall öffnende Verschlusselemente im Bereich der Batterieeinzelzellen und/oder im Bereich eines diese umgebenden Batteriegehäuses der Gesamtbatterie angeordnet sind. Die erwähnte deutsche Offenlegungsschrift beschreibt beispielhaft eine solche Überdrucksicherung im Bereich eines Gehäuses einer Batterieeinzeizelle. Diese besteht aus einem Berstelement, welches beispielsweise als Membran oder als Teil des Gehäuses mit einer Sollbruchstelle ausgebildet ist. Kommt es zu einem Überdruck im Inneren der Batterieeinzelzelle, beispielsweise aufgrund eines Kurzschlusses, so wird die Überdrucksicherung öffnen und den Überdruck abgeben. Dabei kann eine vergleichsweise große Menge an Gasen entstehen, sodass ein die Batterieeinzelzellen umgebendes Batteriegehäuse gemäß dem allgemeinen Stand der Technik typischerweise über Entlüftungsöffnungen, welche entweder offen oder ebenfalls über ein Berstelement oder dergleichen verschlossen ausgebildet sind, verfügt. Beim Einsatz einer derartigen Batterie in einem Fahrzeug ist es nun wichtig, dass die vergleichsweise große Gasmenge, welche bei einer Überlastung der Batterie entstehen kann, zuverlässig aus dem Fahrzeug abgeführt wird, ohne dass diese in den Innenraum des Fahrzeugs gelangt, in welchem typischerweise die Insassen sitzen und durch die Gase gegebenenfalls geschädigt werden könnten.

Bei den allgemein üblichen Aufbauten ist es daher vorgesehen, dass Entlüftungsöffnungen der Batterie, welche typischerweise im Bereich eines die Gesamtbatterie umgebenden Batteriegehäuses angeordnet sind, über entsprechende Leitungselemente mit der Umgebung des Fahrzeugs verbunden sind. Diese Leitungselemente müssen dicht mit der Entlüftungsöffnung verbunden werden und so in dem Fahrzeug verlegt werden, dass ein Eindringen der im Falle eines Überdrucks abströmenden Gase in den Innenraum des Fahrzeugs sicher und zuverlässig vermieden wird. Der Aufwand hinsichtlich der Leitungselemente, der Leitungsführung sowie der Konstruktion und Abdichtung von Schnittstellen ist damit vergleichsweise groß.

Ein Fahrzeug mit den Merkmalen des Oberbegriffs des Anspruchs 1 ist aus der US 2011/027 632 A1 bekannt.

Aus dem weiteren allgemeinen Stand der Technik ist es außerdem bekannt, Batterien im Bereich einer Tragstruktur eines Fahrzeugs anzuordnen.

In der US 2010/0213741 A1 ist beispielsweise beschrieben, elektrochemische Komponenten, in diesem Fall Brennstoffzellen, im Mitteltunnel des Fahrzeugs, also im Bereich der Tragstruktur des Fahrzeugs, anzuordnen. Um die elektrochemischen Einheiten im Crashfall nicht unnötig zu belasten, weist der Mitteltunnel entsprechende Aussteifungen auf, welche zwischen den elektrochemischen Einheiten angeordnet sind und dafür sorgen, dass Kräfte im Falle eines Crashs nicht über die elektrochemischen Bauelemente geleitet werden. Dadurch wird die Sicherheit erhöht und die Gefahr einer eventuellen Beschädigung der elektrochemischen Baueinheiten wird verringert.

Aus der FR 2 942 764 A1 ist es ferner bekannt, Energiespeichereinrichtungen, beispielsweise auch Batterien, in Bereichen der Tragstruktur eines Fahrzeugs anzuordnen, in denen Freiräume verbleiben. Damit lassen sich platzsparend die entsprechenden Einrichtungen zur Energiespeicherung in die Tragstruktur des Fahrzeugs integrieren und nehmen keinen anderweitig benötigten Bauraum weg.

Die beiden beschriebenen Schriften schildern also jeweils die Integration von Brennstoffzellen oder von Batterien in bestehende Hohlräume der Tragstruktur eines Fahrzeugs.

Die Aufgabe der hier vorliegenden Erfindung besteht nun darin, ein Fahrzeug mit einer Batterie anzugeben, bei welchem der benötigte Bauraum minimiert werden kann.

Erfindungsgemäß wird diese Aufgabe durch die im Patentanspruch 1 genannten Merkmale gelöst. Weitere vorteilhafte Ausgestaltungen der erfindungsgemäßen Lösung ergeben sich aus den hiervon abhängigen Unteransprüchen.

Bei dem erfindungsgemäßen Fahrzeug ist es also vorgesehen, dass die wenigstens eine Entlüftungsöffnung der Batterie mit dem Innenraum wenigstens eines der als Hohlprofile ausgebildeten Trägers, und über diesen direkt oder über weitere als Hohlprofile ausgebildete Träger mit der Umgebung des Fahrzeugs in Verbindung stehen. Die typischerweise ohnehin als Hohlprofile ausgebildeten Träger, welche oft als Rohre mit rundem oder rechteckigem Querschnitt ausgebildet werden, werden erfindungsgemäß als Leitungselemente zum Abführen der im Schadensfall aus der Entlüftungsöffnung der Batterie austretenden Gase genutzt. Typischerweise weisen die Hohlprofile der Träger einen entsprechend großen Querschnitt auf, sodass die vergleichsweise großen Gasmengen, welche sich im Schadensfall im Bereich der Batterie bilden, durch die Träger problemlos abgeführt werden können. Die als Hohlprofile ausgebildeten Träger stehen an ihren Stirnseiten typischerweise mit dem Außenbereich der Fahrzeugkarosserie in Verbindung und weisen keine Verbindung zum Innenraum des Fahrzeugs auf. Sie sind daher ideal geeignet, die Gase an die Umgebung abzuführen, ohne die Insassen eines Fahrzeugs zu gefährden. Auf zusätzliche Leitungselemente, wie sie beim Stand der Technik notwendig sind, kann hier verzichtet werden. Es muss lediglich eine Öffnung an geeigneter Stelle im Bereich des Trägers oder gegebenenfalls am Übergang von einem der Träger in einen anderen der Träger vorgesehen werden. Der Aufbau ist daher hinsichtlich des Bauraums, der benötigten Bauteile und insbesondere hinsichtlich des Montage- und Abdichtungsaufwands gegenüber den Aufbauten aus dem Stand der Technik prädestiniert.

In einer günstigen Ausgestaltung des erfindungsgemäßen Fahrzeugs ist es ferner vorgesehen, dass die Batterie im Bereich der Tragstruktur angeordnet ist. Eine solche Anordnung der Batterie im Bereich der Tragstruktur ist für das erfindungsgemäß aufgebaute Fahrzeug ideal, da hierdurch eventuelle Leitungselemente zwischen der Entlüftungsöffnung und dem Eintritt in die Hohlprofile der Tragstruktur minimiert oder weggelassen werden können.

In einer weiteren sehr günstigen Ausgestaltung des erfindungsgemäßen Fahrzeugs ist es dementsprechend vorgesehen, dass die Batterie ein Batteriegehäuse mit wenigstens einer Entlüftungsöffnung aufweist, wobei die wenigstens eine Entlüftungsöffnung direkt mit wenigstens einer Öffnung in wenigstens einem der Träger zusammenwirkt.

In diesem besonders bevorzugten Aufbau des erfindungsgemäßen Fahrzeugs kann also auf sämtliche Leitungselemente verzichtet werden, indem die Entlüftungsöffnung eines Batteriegehäuses der Batterie unmittelbar mit dem Träger zusammenwirkt. Hier kann eine feste Verbindung, beispielsweise eine stoffschlüssige oder formschlüssige Verbindung, vorliegen oder es kann über ein Dichtelement eine abdichtende Verbindung geschaffen werden. Bei dem Aufbau ist dann lediglich ein einziges Dichtelement zwischen dem Batteriegehäuse und dem Träger notwendig oder kann bei stoffschlüssiger Verbindung ganz wegfallen.

In einer besonders günstigen und vorteilhaften Weiterbildung des erfindungsgemäßen Fahrzeugs ist es außerdem vorgesehen, dass die Batterie ein Batteriegehäuse aufweist, wobei das Batteriegehäuse oder ein Teil des Batteriegehäuses, insbesondere eine Bodenwanne des Batteriegehäuses, als Bauteil der Tragstruktur ausgebildet ist.

In dieser besonders bevorzugten Weiterbildung kann das Batteriegehäuse oder ein Teil des Batteriegehäuses also sowohl eine Funktion als Batteriegehäuse übernehmen, als auch eine tragende Funktion als Bauteil in der Tragstruktur des Fahrzeugs. Durch diese Doppelfunktionalität des Batteriegehäuses als Batteriegehäuse einerseits und als Bauteil der Tragstruktur des Fahrzeugs andererseits lässt sich weiterer Bauraum einsparen, da auf Teile der herkömmlichen Tragstruktur, welche durch das Batteriegehäuse oder einen Teil des Batteriegehäuses ersetzt werden, verzichtet werden kann.

Die Verwendung des Batteriegehäuses oder eines Teil des Batteriegehäuses als Bauteil der Tragstruktur ermöglicht eine stabile und steife Tragstruktur einerseits und erlaubt es andererseits, den elektrochemischen Aufbau der Batterie, welcher typischerweise in Form von einem oder mehreren Stapeln von prismatischen Batterieeinzelzellen ausgebildet ist, in herkömmlicher Art und Weise - vergleichsweise weich - auszuführen. Damit lässt sich Aufwand bei der Herstellung der Batterie und Baugewicht bei der Batterie einsparen, während gleichzeitig zumindest ein Teil des ohnehin benötigten Batteriegehäuses als hochstabiles Bauteil der Tragstruktur ausgebildet werden kann.

In einer sehr vorteilhaften Weiterbildung hiervon ist es ferner vorgesehen, dass das Batteriegehäuse wenigstens ein Versteifungselement, insbesondere in Form von Kühlvorrichtungen für die Batterie, aufweist.

Ein solches Versteifungselement in dem Batteriegehäuse kann dazu dienen, das Batteriegehäuse als Bauteil der Tragstruktur ausreichend stabil und steif auszubilden, ohne dabei das gesamte Batteriegehäuse unnötig schwer ausführen zu müssen.

Der typische Aufbau von Batterien, wie sie beispielsweise als Traktionsbatterien in zumindest teilweise elektrisch angetriebenen Fahrzeugen eingesetzt werden, sieht es vor, dass Batterieeinzelzellen verwendet werden, welche einer aktiven Kühlung bedürfen. Diese Batterieeinzelzellen, beispielsweise in Lithium-Ionen-Technologie, werden häufig als prismatische Batterieeinzelzellen zu einem oder mehreren Zellenstapeln aufgestapelt und zu der Batterie vereint. Um eine sichere und gleichmäßige Kühlung der Batterieeinzelzellen sicherstellen zu können, ist es häufig vorgesehen, dass wenigstens eine Kühlvorrichtung, welche oft als Platte oder in Form von Rohren ausgebildet ist und auf einer oder mehreren der Seiten des Zellenstapels angeordnet ist, zur Temperierung und Kühlung der Batterieeinzelzellen vorhanden ist. Diese Kühlvorrichtung, welche insbesondere als metallische Platte, welche aktiv von einem Kühlmedium, beispielsweise dem Kühlmittel einer Klimaanlage, durchströmt wird, ausgebildet ist, ist typischerweise sehr steif und kann neben der Funktionalität der Kühlung ideal auch die Funktionalität eines Versteifungselements in dem Batteriegehäuse übernehmen. Der Aufbau kann so ein sehr steifes Batteriegehäuse bereitstellen, welches sich ideal als Bauteil der Tragstruktur des Fahrzeugs eignet, und welches durch die Ausbildung der Versteifungselemente als Kühlvorrichtung zusätzlich Bauraum und Gewicht einer separaten Kühlvorrichtung oder separater Versteifungselemente einsparen kann.

In einer sehr vorteilhaften Weiterbildung des erfindungsgemäßen Fahrzeugs ist es ferner vorgesehen, dass die Batterie als Traktionsbatterie zur Speicherung von elektrischer Antriebsleistung in dem zumindest teilweise elektrisch angetriebenen Fahrzeug vorgesehen ist. Die Batterie eignet sich insbesondere als Traktionsbatterie beispielsweise für ein Elektrofahrzeug oder insbesondere für ein Hybridfahrzeug, da sie weitgehend bauraumneutral in den bisherigen Aufbau der Tragstruktur des Fahrzeugs integriert werden kann und daher sehr platzsparend auch in bestehende Antriebskonzepte mit Verbrennungsmotor integrierbar ist. Eine Hybridisierung des Fahrzeugs wird damit einfach und effizient möglich.

Weitere vorteilhafte Ausgestaltungen des erfindungsgemäßen Fahrzeugs ergeben sich aus den restlichen abhängigen Unteransprüchen und werden anhand des Ausführungsbeispiels deutlich, welches nachfolgend unter Bezugnahme auf die Figuren näher beschrieben ist.

Dabei zeigen:
- Fig. 1: eine schematische Ansicht einer Tragstruktur eines Fahrzeugs;
- Fig. 2: eine Schnittdarstellung einer eingebauten Batterie;
- Fig. 3: eine mögliche Ausführungsform eines stirnseitigen Endes eines Trägers der Tragstruktur in einem ersten Zustand (a) und einem zweiten Zustand (b);
- Fig. 4: eine schematische Ansicht einer Tragstruktur eines Fahrzeugs analog der in Fig. 1 mit integrierter Batterie; und
- Fig. 5: die Integration einer Batterie in die Tragstruktur des Fahrzeugs in einem vergrößert dargestellten Schnitt aus Fig. 4.

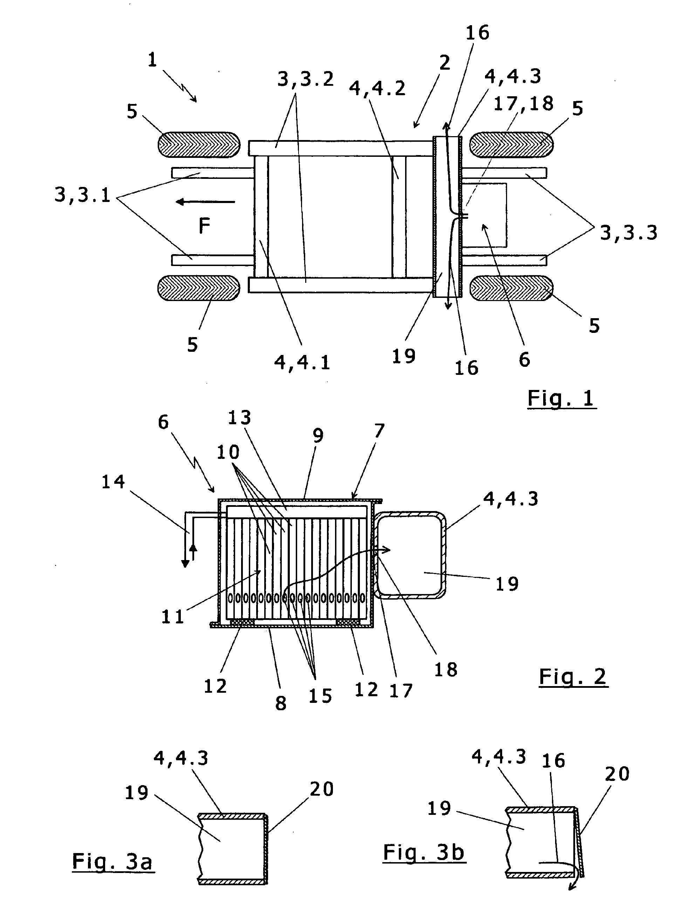

In der Darstellung der Figur 1 ist ein Fahrzeug 1 beziehungsweise die Tragstruktur 2 eines solchen Fahrzeugs 1 stark vereinfacht und prinzipmäßig angedeutet. Sie besteht im Wesentlichen aus Längsträgern 3 sowie Querträgen 4. Außerdem sind in der Darstellung der Figur 1 Räder 5 des Fahrzeugs 1 zu erkennen. Die Fahrtrichtung des teilweise dargestellten Fahrzeugs 1 ist mit F bezeichnet, sodass das Fahrzeug 1 bei Vorwärtsfahrt in die Richtung des Pfeils F fährt. Zur besseren Orientierung sollen dabei die Längsträger 3 und die Querträger 4 in Fahrtrichtung ausgehend von der Front des Fahrzeugs 1 durchnummeriert werden. Im sogenannten Vorbau des Fahrzeugs 1 finden sich demnach die Längsträger 3.1, in der Mitte des Fahrzeugs 1 die Längsträger 3.2 und im Endbereich des Fahrzeugs die Längsträger 3.3. Die Querträger 4 sind ebenso nummeriert, sodass der auf den Vorbau folgende Querträger 4 mit 4.1, der mittlere Querträger mit 4.2 und der in Fahrtrichtung am weitesten hinten angeordnete Querträger mit 4.3 bezeichnet wird. In Figur 1 ist der Querträger 4.3 dabei im Schnitt dargestellt. Der Aufbau der Tragstruktur 2 ist dabei rein prinzipmäßig zu verstehen, selbstverständlich können mehr oder auch weniger der Längsträger 3 und der Querträger 4 in einer derartigen Tragstruktur verbaut sein.

In dem in Figur 1 dargestellten Ausführungsbeispiel eines Fahrzeugs 1 ist eine Batterie 6 im Bereich eines Hinterbaus des Fahrzeugs angeordnet. Die Batterie 6, welche in der Schnittdarstellung der Figur 2 nochmals im Detail zu erkennen ist, weist ein Batteriegehäuse 7 auf, welches in dem hier dargestellten Ausführungsbeispiel aus einem Bodenteil 8 und einem Deckelteil 9 besteht. In dem Batteriegehäuse 7 sind in an sich bekannter Art und Weise mehrere Batterieeinzelzellen 10 angeordnet. In dem hier dargestellten Ausführungsbeispiel sind die Batterieeinzelzellen 10 jeweils als prismatische Batterieeinzelzellen 10 ausgebildet und zu einem Zellenstapel 11 aufgestapelt. Alternative Ausführungsformen beispielsweise mit zylindrischen Batterieeinzelzellen wären selbstverständlich ebenso denkbar. Die Ansammlung der Batterieeinzelzellen 10, in dem hier dargestellten Ausführungsbeispiel der Zellenstapel 9, ist über prinzipmäßig angedeutete Aufnahmeelemente 12 in dem Batteriegehäuse 7 aufgenommen und kann über geeignete Elektronikbauteile wie beispielsweise ein Batteriemanagementsystem verfügen, welches hier nicht dargestellt ist. Außerdem soll eine aktive Kühlung der Batterieeinzelzellen 10 möglich sein. Dies ist in dem hier dargestellten Ausführungsbeispiel über eine Kühlvorrichtung 13 angedeutet, welche in Form einer Kühlplatte auf einer Seite des Zellstapels 11 angeordnet ist. Die Kühlvorrichtung 13 kann in an sich bekannter Art und Weise beispielsweise von einem eigens für die Batterie 6 aufgebauten Kühlkreislauf und/oder einer Klimaanlage des Fahrzeugs 1 aktiv gekühlt werden. Auch dieser Aufbau der Kühlung spielt für die Erfindung keine wesentliche Rolle und ist aus dem allgemeinen Stand der Technik bekannt, sodass hierauf nicht näher eingegangen wird. Die aktive Kühlung ist lediglich durch zwei Kühlleitungen 14 zur Zufuhr und Abfuhr eines Kühlmediums angedeutet.

Jede der Batterieeinzelzellen 10 weist nun ein Verschlusselement 15 auf, welches als Überdrucksicherung ausgebildet ist und beispielsweise als Berstelement realisiert sein kann. Ebenso wäre es denkbar, das Verschlusselement 15 in Form eines federbelasteten (Rückschlag)-Ventils oder dergleichen auszubilden. Kommt es nun in einer oder mehreren der Batterieeinzelzellen 10 zu einem Überdruck, beispielsweise aufgrund eines Kurzschlusses oder aufgrund einer ungeplanten Überladung, so wird das Verschlusselement 15 ab einem bestimmten Druck öffnen, sodass die Gase aus der betroffenen Batterieeinzelzelle 10 entweichen können. Dies ist hier am Beispiel einer der Batterieeinzelzellen 10 dargestellt. Die Gase, welche durch die mit 16 bezeichneten Pfeile angedeutet sind, entweichen aus der Batterieeinzelzelle 10 und sorgen für einen entsprechenden Überdruck in dem Batteriegehäuse 7. Das Batteriegehäuse 7 weist eine Entlüftungsöffnung 17 auf, welche entweder offen ausgebildet sein kann oder ebenfalls über ein hier nicht dargestelltes Verschlusselement in der Art des Verschlusselements 15 der Batterieeinzelzellen 10 verschlossen werden kann. Kommt es nun zu einem Überdruck in dem Batteriegehäuse 7, so entweicht das Gas 16 durch die Entlüftungsöffnung 17, und gelangt über eine Bohrung 18 in den Bereich des Querträgers 4.3. Das Bodenteil 8 des Batteriegehäuses 7 ist dabei so mit dem Querträger 4 verbunden beziehungsweise gegen diesen gepresst, dass eine dichtende Verbindung zwischen dem Inneren des Batteriegehäuses 7 bei geöffneter Entlüftungsöffnung 17 und dem Inneren 19 des Querträgers 4.3 entsteht. Die Gase 16 strömen damit aus dem Batteriegehäuse 7 in das Innere 19 des als Hohlprofil ausgebildeten Querträgers 4.3 und können aus diesem typischerweise an seinen offenen Stirnseiten, wie es in der Darstellung der Figur 1 zu erkennen ist, entsprechend abströmen.

Da die offenen Stirnseiten des Querträgers 4.3 typischerweise nur mit der Umgebung des Fahrzeugs 1 und nicht mit dem Innenraum desselben in Verbindung stehen, ist eine sichere und zuverlässige Ableitung von eventuellen entstehenden Gasen 16 aus der Batterie 6 an die Umgebung gewährleistet, ohne dass Insassen des Fahrzeugs 1 mit den Gasen 16 in Kontakt kommen und hierdurch gegebenenfalls gefährdet wären.

In der Darstellung der Figur 3 ist eine Möglichkeit zu erkennen, die Stirnseiten des Querträgers 4 über eine Klappe 20 als Rückschlagelement entsprechend zu verschließen. Im regulären Betrieb stellt dies sicher, dass - beispielsweise bei dauerhaft offener Entlüftungsöffnung 17 - keine Verschmutzungen über den Innenraum 19 des Querträgers 4.3 in das Batteriegehäuse 7 eindringen. Kommt es zu einem Abströmen von Gasen 16, so wird die Klappe, wie in der Darstellung der Figur 3b zu erkennen ist, in diesem Fall gegen die Schwerkraft der Klappe geöffnet. Hier könnte ebenso ergänzend oder alternativ zur Schwerkraft eine Feder vorgesehen sein. Selbstverständlich ist es auch denkbar, aktiv angesteuerte Klappen 20 oder Membranen als Berstelement einzusetzen.

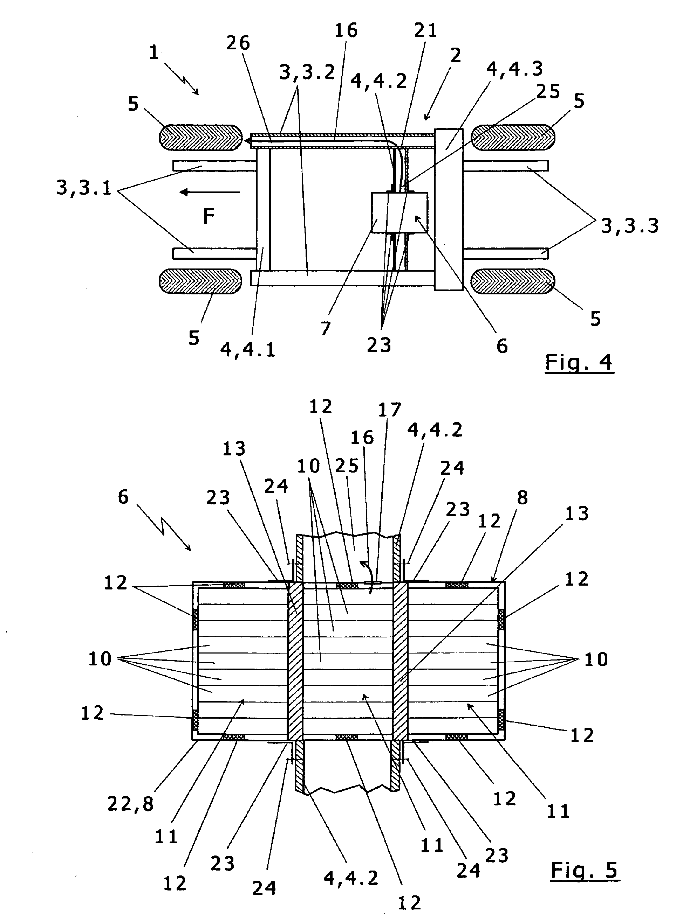

In der Darstellung der Figur 4 ist eine alternative Ausführungsform analog zur Darstellung in Figur 1 zu erkennen.

Die Batterie 6 bildet hierbei in später noch näher beschriebener Art und Weise ein in die Tragstruktur 2 eingebundenes tragendes Bauteil, welches in dem hier dargestellten Ausführungsbeispiel als Teil des Querträgers 4.2 ausgebildet ist. Dieser ist hier zusammen mit einem Längsträger 3.2 in einer Schnittdarstellung zu erkennen. Die Batterie 6 beziehungsweise das Batteriegehäuse 7 weist wiederum eine Entlüftungsöffnung 17 auf, welche in der Darstellung der Figur 5 lediglich angedeutet ist. Eventuell im Bereich der Batterie 6 unter Überdruck anfallende Gase 16 werden dann durch einen Teil des Querträgers 4.2 geleitet und gelangen über eine in einem der Längsträger 3.2 angeordnete Öffnung 21 in das Innere dieses Längsträgers 3.2 und entsprechend der hier dargestellten Pfeile über die Stirnseite dieses Längsträgers 3.2 in die Umgebung des Fahrzeugs 1. Der in Figur 4 dargestellte Aufbau hat neben der Möglichkeit der Ableitung eventueller Gase durch den Querträger 4.2 und den Längsträger 3.2 zusätzlich den entscheidenden Vorteil, dass die Batterie 6 beziehungsweise ein Teil des Batteriegehäuses 7 ein Bauteil der Tragstruktur 2 ist. Wie es in der Darstellung der Figur 5 besser zu erkennen ist, ist das Batteriegehäuse 7 der Batterie 6 beispielsweise mit einem als Bodenwanne 22 konzipierten Bodenteil 8 so ausgebildet, dass das Batteriegehäuse 7 Aufnahmen 23 aufweist, welche beispielsweise mit der Bodenwanne 22 der Batterie 6 verschweißt sein können. Diese Aufnahmen 23 sind über Schrauben 24 lösbar mit den beiden Abschnitten des Querträgers 4.2 verbunden. Die Bodenwanne 22 kann dabei insbesondere als Hohlraumkonstruktion ausgebildet sein, um bei möglichst leichtem Gewicht möglichst gut die Kräfte von dem einen Teil des Querträgers 4.2 in dessen anderen Teil weiterzuleiten. Die Bodenwanne 22 kann außerdem Versteifungselemente aufweisen, welche dies unterstützen. In der Darstellung der Figur 5 sind im Querschnitt zwei der Kühlvorrichtungen 13 in Form von Kühlplatten zwischen den Zellstapeln 11 zu erkennen. Da diese typischerweise aus einem metallischen Material ausgebildet sind und eine entsprechend hohe Steifigkeit aufweisen, können diese in idealer Weise die Versteifungselemente bilden. Sie können Kräfte von der einen Seite der Bodenwanne 22 auf deren andere Seite weiterleiten, ohne dass hierfür zusätzliche Bauelemente notwendig wären.

In der Darstellung der Figur 5 ist die Entlüftungsöffnung 17 zu erkennen, welche beispielsweise als dauerhafte Öffnung in der Bodenwanne 22 der Batterie 6 ausgebildet ist. Sie steht mit dem Inneren 25 des einen Teils des Querträgers 4.2 in Verbindung. Der Querträger 4.2 kann dafür über ein hier nicht dargestelltes Dichtungselement im Bereich seiner Stirnseite oder im Bereich der Aufnahmen 23 so an die Bodenwanne 22 der Batterie 6 angebracht sein, dass die Gase sicher und zuverlässig aus der Entlüftungsöffnung 17 in das Innere 25 des Querträgers 4.2 strömen, ohne an die Umgebung zu gelangen. Wie bei der Darstellung der Figur 4 bereits beschrieben, gelangen sie dann über den Längsträger 3.2 in die Umgebung des Fahrzeugs 1, ohne die Insassen des Fahrzeugs im Innenraum desselben zu gefährden.

## Patentansprüche

1. Fahrzeug (1) mit einer Batterie (6) und einer Fahrzeug-Tragstruktur (2), welche mehrere als Hohlprofile ausgebildete Träger (3, 4) aufweist, wobei die Batterie (6) wenigstens eine Entlüftungsöffnung (17) aufweist,
**dadurch gekennzeichnet, dass**
die wenigstens eine Entlüftungsöffnung (17) der Batterie (6) mit dem Innenraum (19, 25) wenigstens eines der als Hohlprofile ausgebildeten Träger (3, 4), und über diesen direkt oder über weitere als Hohlprofile ausgebildete Träger (3, 4) mit der Umgebung des Fahrzeugs (1) in Verbindung steht.

2. Fahrzeug (1) nach Anspruch 1,
**dadurch gekennzeichnet, dass**
die Batterie (6) im Bereich der Tragstruktur (2) angeordnet ist.

3. Fahrzeug (1) nach Anspruch 1 oder 2,
**dadurch gekennzeichnet, dass**
die Batterie (6) ein Batteriegehäuse (7) mit der wenigstens einen Entlüftungsöffnung (17) aufweist, wobei die wenigstens eine Entlüftungsöffnung (17) direkt mit wenigstens einer Öffnung (18) in wenigstens einem der Träger (4.3, 4.2) zusammenwirkt.

4. Fahrzeug (1) nach einem der Ansprüche 1 bis 3,
**dadurch gekennzeichnet, dass**
die wenigstens eine Entlüftungsöffnung (17) ein Verschlusselement in Form einer Ventileinrichtung, eines Rückschlagelements, eines Berstelements oder dergleichen aufweist.

5. Fahrzeug (1) nach einem der Ansprüche 1 bis 4,
**dadurch gekennzeichnet, dass**
die Batterie (6) aus einer Vielzahl von Batterieeinzelzellen (10) aufgebaut ist, welche jeweils ein Verschlusselement (15) in Form eines Überdruckventils oder eines Berstelements aufweisen.

6. Fahrzeug (1) nach einem der Ansprüche 1 bis 5,
**dadurch gekennzeichnet, dass**
die Verbindung des wenigstens einen als Hohlprofil ausgebildeten Trägers (3, 4) mit der Umgebung des Fahrzeugs (1) ein Verschlusselement, insbesondere ein Rückschlagelement (20), gegen eindringende Medien aufweist.

7. Fahrzeug (1) nach Anspruch 4, 5 oder 6,
**dadurch gekennzeichnet, dass**
das wenigstens eine Verschlusselement (15) druckabhängig öffnet.

8. Fahrzeug (1) nach einem der Ansprüche 1 bis 7,
**dadurch gekennzeichnet, dass**
die Batterie (6) ein Batteriegehäuse (7) aufweist, wobei das Batteriegehäuse (7) oder ein Teil des Batteriegehäuses (8, 22), insbesondere eine Bodenwanne (22) des Batteriegehäuses (7), als Bauteil der Tragstruktur (2) ausgebildet ist.

9. Fahrzeug (1) nach Anspruch 8,
**dadurch gekennzeichnet, dass**
das Batteriegehäuse (7) wenigstens ein Versteifungselement, insbesondere in Form von Kühlvorrichtungen (13) für die Batterie (6), aufweist.

10. Fahrzeug (1) nach einem der Ansprüche 1 bis 9,
**dadurch gekennzeichnet, dass**
die Batterie (6) als Traktionsbatterie zur Speicherung von elektrischer Antriebsleistung in dem zumindest teilweise elektrisch angetriebenen Fahrzeug vorgesehen ist.

## Claims

1. Vehicle (1) with a battery (6) and a vehicle support structure (2) comprising a plurality of members (3, 4) designed as hollow sections, the battery (6) having at least one vent opening (17),
**characterised in that**
the at least one vent opening (17) of the battery (6) is connected to the interior (19, 25) of at least one of the members (3, 4) designed as hollow sections and, directly via this or via further members (3, 4) designed as hollow sections, to the environment of the vehicle (1).

2. Vehicle (1) according to claim 1,
**characterised in that**
the battery (6) is located in the region of the support structure (2).

3. Vehicle (1) according to claim 1 or 2,
**characterised in that**
the battery (6) has a battery housing (7) with the at least one vent opening (17), the at least one vent opening (17) directly acting together with at least one opening (18) in least one of the members (4.3, 4.2).

4. Vehicle (1) according to any of claims 1 to 3,
**characterised in that**
the at least one vent opening (17) comprises a closing element in the form of a valve device, a non-return element, a bursting element or the like.

5. Vehicle (1) according to any of claims 1 to 4,
**characterised in that**
the battery (3) is made up from a plurality of battery cells (10), each of which comprises a closing element (15) in the form of a relief valve or a bursting element.

6. Vehicle (1) according to any of claims 1 to 5,
**characterised in that**
the connection of the at least one member (3, 4) to the environment of the vehicle (1) comprises a closing element, in particular a non-return element (20) against media ingress.

7. Vehicle (1) according to claim 4, 5 or 6,
**characterised in that**
the at least one closing element (15) opens in a pressure-dependent way.

8. Vehicle (1) according to any of claims 1 to 7,
**characterised in that**
the battery (6) has a battery housing (7), the battery housing (7) or a part of the battery housing (8, 22), in particular a floor pan (22) of the battery housing (7), being designed as a component of the support structure (2).

9. Vehicle (1) according to claim 8,
**characterised in that**
the battery hosing (7) comprises at least one reinforcing element, in particular in the form of cooling devices (13) for the battery (6).

10. Vehicle (1) according to any of claims 1 to 9,
**characterised in that**
the battery (6) is provided as a traction battery for the accumulation of electric drive power in the vehicle, which is at least partially driven electrically.

## Revendications

1. Véhicule (1) doté d'une batterie (6) et d'une structure de support de véhicule (2) comprenant plusieurs supports (3, 4) se présentant sous la forme de profilés creux, la batterie (6) comprenant au moins une ouverture d'aération (17), **caractérisé en ce que** la ou les ouvertures d'aération (17) de la batterie (6) sont reliées à l'espace intérieur (19, 25) d'au moins un des supports (3, 4) se présentant sous la forme de profilés creux, et sont reliées aux zones environnantes du véhicule (1) par l'intermédiaire de ceux-ci directement ou par l'intermédiaire d'autres supports (3, 4) se présentant sous la forme de profilés creux.

2. Véhicule (1) selon la revendication 1, **caractérisé en ce que** la batterie (6) est disposée dans la zone de la structure de support (2).

3. Véhicule (1) selon l'une la revendication 1 ou la revendication 2, **caractérisé en ce que** la batterie (6) présente un boîtier (7) de batterie doté d'au moins une ou des ouvertures d'aération (17), la ou les ouvertures d'aération (17) agissant ensemble directement avec au moins une ouverture (18) dans au moins un des supports (4.3, 4.2).

4. Véhicule (1) selon l'une quelconque des revendications 1 à 3, **caractérisé en ce que** la ou les ouvertures d'aération (17) présentent un élément de fermeture en forme d'un dispositif de soupape, un élément de non-retour, un élément de commande ou similaire.

5. Véhicule (1) selon l'une quelconque des revendications 1 à 4, **caractérisé en ce que** la batterie (6) est conçue d'une pluralité de cellules (10) individuelles de batterie qui présentent chacune un élément de fermeture (15) se présentant sous la forme d'une soupape de surpression ou d'un élément de commande.

6. Véhicule (1) selon l'une quelconque des revendications 1 à 5, **caractérisé en ce que** la liaison du ou des supports (3, 4) se présentant sous la forme de profilés creux avec les zones environnantes du véhicule présente un élément de fermeture, en particulier un élément anti-retour (20), contre l'infiltration d'agents.

7. Véhicule (1) selon les revendications 4, 5 ou 6, **caractérisé en ce que** le ou les éléments de fermeture (15) s'ouvrent en fonction de la pression.

8. Véhicule (1) selon l'une quelconque des revendications 1 à 7, **caractérisé en ce que** la batterie (6) présente un boîtier (7) de batterie, le boîtier de batterie (7) ou une partie du boîtier de batterie (8, 22), en particulier une coque inférieure (22) du boîtier de batterie (7), en tant qu'élément de la structure de support (2).

9. Véhicule (1) selon la revendication 8, **caractérisé en ce que** le boîtier de batterie (7) présente au moins un élément de raidissement, en particulier en forme de dispositifs de refroidissement (13) pour la batterie (6).

10. Véhicule (1) selon l'une quelconque des revendications 1 ou 9, **caractérisé en ce que** la batterie (6) est conçue en tant que batterie de traction destinée au stockage de la force d'entraînement électrique dans le véhicule entraîné du moins en partie électriquement.
